# EUROPÄISCHE PATENTSCHRIFT

(11) **EP 1 080 550 B1**
(45) Veröffentlichungstag und Bekanntmachung des Hinweises auf die Patenterteilung: **26.03.2003**
(21) Anmeldenummer: 99929091.9
(22) Anmeldetag: 03.05.1999
(51) Int. Cl.: H04B 7/08

(54) **VERFAHREN UND FUNKSTATION ZUR SIGNALÜBERTRAGUNG IN EINEM FUNK-KOMMUNIKATIONSSYSTEM**
METHOD AND RADIO STATION FOR SIGNAL TRANSMISSION IN A RADIO COMMUNICATION SYSTEM
PROCEDE ET STATION RADIO POUR TRANSMISSION DE SIGNAUX DANS UN SYSTEME DE RADIOTELECOMMUNICATION

(30) Priorität: 29.05.1998 DE 19824152
(43) Veröffentlichungstag der Anmeldung: 07.03.2001
(73) Patentinhaber: SIEMENS AKTIENGESELLSCHAFT, 80333 München (DE)
(72) Erfinder: DAUERER, Jörg, D-82194 Gröbenzell (DE); EMMER, Dieter, D-82319 Starnberg (DE); MERZ, Peter, D-81373 München (DE); MONSCHAU, Jörg, D-81379 München (DE); SOKAT, Jörg, D-80935 München (DE); WEBER, Peter, D-57392 Schmallenberg (DE); WIECHERT, Henry, D-81377 München (DE)
(86) Internationale Anmeldenummer: DE9901316
(87) Internationale Veröffentlichungsnummer: WO99062198

(56) Entgegenhaltungen:
- EP-A- 0 364 190
- EP-A- 0 474 491
- US-A- 5 530 926

## Beschreibung

Die Erfindung betrifft ein Verfahren und eine Funkstation zur Signalübertragung in einem Funk-Kommunikationssystem, insbesondere in einem Mobilfunksystem.

In Funk-Kommunikationssystemen werden Informationen wie beispielsweise Sprache, Bildinformationen oder andere Daten, mit Hilfe von elektromagnetischen Wellen über eine Funkschnittstelle zwischen einer sendenden und einer empfangenden Funkstation, wie beispielsweise einer Basisstation bzw. Mobilstation für den Fall eines Mobilfunksystems, übertragen. Das Abstrahlen der elektromagnetischen Wellen erfolgt dabei mit Trägerfrequenzen, die in dem für das jeweilige System vorgesehenen Frequenzband liegen. Beim GSM-Mobilfunksystem (Global System for Mobile Communication) liegen die Trägerfrequenzen im Bereich von 900 MHz, 1800 MHz und 1900 MHz. Für zukünftige Mobilfunksysteme mit CDMA- und TD/CDMA- Übertragungsverfahren über die Funkschnittstelle, wie beispielsweise das UMTS (Universal Mobile Telecommunication System) oder andere Systeme der 3. Generation sind Trägerfrequenzen im Bereich von ca. 2000 MHz vorgesehen.

In der Funkstation werden die zu sendenden Signale in einer Sendeeinrichtungen erzeugt. Über Kabelverbindungen und diverse weitere Einrichtungen wie Vorverstärker etc. werden die Sendesignale einer Antenneneinrichtung zugeführt, die letztlich die Funksignale abstrahlt. Die gesendeten Funksignalen werden von einer Empfangseinrichtungen der empfangenen Funkstation aufgenommen und ausgewertet.

Unter reellen Einsatzbedingungen für Funk-Kommunikationssysteme sind die Funksignale verschiedenartigsten Störungen ausgesetzt und erreichen die Empfangseinrichtung auf sehr unterschiedlichen Ausbreitungswegen. Außer einem direkten Ausbreitungsweg können die Funksignale auch an Hindernissen wie Bergen, Bäumen, Gebäuden u.ä. reflektiert oder gebeugt werden. In der Empfangseinrichtung überlagern sich die Funksignale der verschiedenen Ausbreitungswege. Dies führt zu Auslöschungseffekten, die den Empfang der Funksignale mitunter stark beeinträchtigen, siehe dazu J.D.Parsons, "The Mobile Radio Propagation Channel", Pentech Press Publishers, London, 1992, S.108-113.

Um diese Auslöschungseffekte, auch Fadingeffekte genannt, zu umgehen, sind verschiedene Methoden bekannt. Durch Antennen-Diversität, d.h. durch die Verwendung von mehreren Antennen für die Sende- und/oder Empfangseinrichtung können diese Fadingeffekte reduziert werden. Da jedoch der Einsatz der Antennen-Diversität eine Erhöhung der Kosten und Komplexität in der Basisstation bzw. in der Mobilstation eines Mobilfunksystems bedeutet, wird die Antennen-Diversität bisher nur in den Basisstationen eingesetzt.

Weiterhin ist es aus dem GSM-Mobilfunksystem bekannt, über ein Frequenz-Sprungverfahren (Frequency Hopping - FH), d.h. die Sendefrequenz für die Funksignale zu verändern (M. Mouly, M.B.Pautet, "The GSM System for Mobile Communications", 1992, u.a. S.218-223), eine Verbesserung der Empfangsbedingungen zu bewirken. Aus dem Stand der Technik sind weiterhin gemäß den Schriften DE 44 32 928, WO 93/20625 und WO 95/32558 Verfahren und Einrichtungen bekannt, die eine Kombination eines Frequenz-Sprungverfahrens mit einem Antennen-Sprungverfahren aufweisen. Diese Methoden weisen neben einer aufwendigen Implementierung den Nachteil auf, daß sie in den breitbandigen Mobilfunksystemen der 3. Generation, denen voraussichtlich jeweils nur ein Frequenzband für die Aufwärts- bzw. Abwärtsrichtung im Falle des FDD- Verfahrens (FDD - Frequency Division Duplex) bzw. ein Frequenzband für die Aufwärts- und Abwärtsrichtung im Falle des TDD-Verfahrens (TDD - Time Division Duplex) zur Verfügung steht, nicht eingesetzt werden können.

Es wird auch auf das Dokument US-A-5 530 926 verwiesen, WO die Antenne mit dem besten Empfang ausgewählt wird.

Aus dem Artikel von Kondo, Suwa "Linear Predictive Transmission Diversity for TDMA/TDD Personal Communication Systems", IEICE Trans. Commun., Vol. E79-B, No. 10, October 1996, S. 1586-1591, ist ein Mobilfunksystem auf Mikrozellenbasis bekannt, bei dem seitens der Basisstation eine lineare Voraussage der Signalstärke an der Mobilstation aufgrund der Reziprozität zwischen der Aufwärts- und der Abwärtsrichtung vorgenommen wird. Die Basisstation empfängt ein Signal in Aufwärtsrichtung von der Mobilstation unter Verwendung der Empfangsdiversität mittels zweier Antenneneinrichtungen und mißt die Signalstärke des Empfangssignals während der Empfangszeit. Aus diesen Messungen ermittelt die Basisstation, welche Antenne die größte Signalstärke an dem Ort der Mobilstation hervorruft, woraufhin die Basisstation das Signal in Abwärtsrichtung über die vorausgesagte Antenne überträgt.

Der Erfindung liegt die Aufgabe zugrunde, ein Verfahren und eine Funkstation anzugeben, die eine Reduzierung des Auslöschungseffektes in zukünftigen Funk-Kommunikationssystemen ermöglichen. Diese Aufgabe wird durch das Verfahren nach den Merkmalen des unabhängigen Patentanspruchs 1 und durch die Funkstation nach den Merkmalen des unabhängigen Patentanspruchs 17 gelöst. Weiterbildungen der Erfindung sind den Unteransprüchen zu entnehmen.

Erfindungsgemäß wird bei dem Verfahren zur Signalübertragung über eine Funkschnittstelle in einem Funk-Kommunikationssystem nach dem unabhängigen Patentanspruch 1, das ein Teilnehmerseparierungsverfahren zur Unterscheidung von Signalen nutzt, wobei ein Funkkanal zumindest durch ein Frequenzband und eine verbindungsindividuelle Feinstruktur definiert ist, zumindest ein Funkkanal für die Signalübertragung zwischen einer ersten und einer zweiten Funkstation zugewiesen und zumindest ein Signal über mindestens zwei Übertragungspfade übertragen. Für jeden Übertragungspfad wird zumindest ein charakteristischer Wert bezüglich der Übertragungsverhältnisse auf der Funkschnittstelle bestimmt. Aus einem Vergleich der einander entsprechenden charakteristischen werte wird ein Steuersignal abgeleitet, durch das der Übertragungspfad individuell für den Funkkanal zur Übertragung eines nachfolgenden Signals ausgewählt wird.

Vorteilhaft bietet dieses Verfahren die Möglichkeit, für jeden Übertragungspfad einen charakteristischen Wert zu bestimmen, um eine Bewertung der Übertragungsverhältnisse für diesen Übertragungspfad durchzuführen. Durch den Vergleich der jeweils für jeden Übertragungspfad bestimmten charakteristischen Werte wird der am besten geeignete Pfad ausgewählt und auf diesem ein oder mehrere nachfolgende Signale übertragen. Die Bestimmung der charakteristischen Werte wird individuell für jeden Funkkanal gesondert durchgeführt, da sich die Übertragungsverhältnisse abhängig von der jeweils verwendeten verbindungsindividuellen Feinstruktur unterscheiden können. Dadurch wird der Besonderheit dieses Systems, das mehrere Funkkanäle innerhalb eines Frequenzbandes für die Signalübertragung verwendet werden, Rechnung getragen, da für jeden Funkkanal der optimale Übertragungspfad bestimmt wird, wodurch vorteilhaft die Übertragungseigenschaften optimiert werden.

Gemäß einer ersten Weiterbildung der Erfindung wird das Signal von der zweiten Funkstation gesendet und über zumindest zwei Antenneneinrichtungen der ersten Funkstation gemäß einem Diversitätsempfang empfangen. Aus dem von der jeweiligen Antenneneinrichtung empfangenen Signal werden die charakteristischen Werte bestimmt und das Steuersignal abgeleitet. Das Steuersignal steuert eine Umschalteeinrichtung an, die ein nachfolgendes Signal individuell für den Funkkanal zu einer der Antenneneinrichtungen der ersten Funkstation schaltet. Bei dieser Ausgestaltung kann in der ersten Funkstation ermittelt werden, über welche Antenneneinrichtung, d.h. über welchen Übertragungspfad das von der zweiten Funkstation gesendete Signal besser empfangen wird. Aus dem Ergebnis des Empfangsfalls können Rückschlüsse auf den Sendefall der ersten Funkstation gemacht werden und vorteilhaft die Antenneneinrichtung, die die bessere Übertragungsqualität bietet, über die Umschalteeinrichtung ausgewählt werden.

Alternativ zu der ersten Weiterbildung wird gemäß einer zweiten Weiterbildung der Erfindung das Signal zeitlich getrennt über jeweils einen Übertragungspfad übertragen. Basierend auf diesem Merkmal wird einer weiteren Ausgestaltung der Erfindung zufolge das zeitlich getrennte Signal von jeweils einer Antenneneinrichtung der ersten Funkstation gesendet und von der zweiten Funkstation empfangen. Die charakteristischen Werte aus dem jeweils empfangenen Signal werden bestimmt und aus deren Vergleich das Steuersignal abgeleitet. Durch das Steuersignal wird eine Umschalteeinrichtung angesteuert, die ein nachfolgendes Signal individuell für den Funkkanal zu einer der Antenneneinrichtungen der ersten Funkstation schaltet. Diese Ausgestaltung ermöglicht vorteilhaft, eine Bestimmung der Übertragungsverhältnisse auf der Funkschnittstelle in der zweiten Funkstation durchzuführen, wenn diese nur über eine Antenneneinrichtung verfügt, und ein Schalten der nachfolgenden Signale zu einer der Antenneneinrichtungen der ersten Funkstation anzuregen.

Dabei können gemäß weiteren alternativen Ausgestaltungen die in der zweiten Funkstation bestimmten charakteristischen Werte zu der ersten Funkstation übertragen werden, die daraus das Steuersignal ableitet und die Umschalteeinrichtung ansteuert, oder aus den bestimmten charakteristischen Werten das Steuersignal in der zweiten Funkstation abgeleitet und dieses zu der ersten Funkstation übertragen werden, wobei das Steuersignal die Umschalteeinrichtung in der ersten Funkstation ansteuert. Die Übertragung der charakteristischen Werte bzw. des Steuersignals kann einer weiteren Weiterbildung zufolge vorteilhaft gemäß einer Inbandsignalisierung erfolgen, da hierdurch keine nachteilige Beeinträchtigung der Übertragungskapazität des jeweiligen Funkkanals auftritt.

Gemäß einer weiteren Weiterbildung der Erfindung wird das Steuersignal bei einer Zuweisung von mehreren Funkkanälen für die Signalübertragung zwischen der ersten Funkstation und der zweiten Funkstation aus einem Vergleich aller für die jeweiligen Funkkanäle bestimmten und einander entsprechenden charakteristischen Werte abgeleitet. Durch das Steuersignal wird ein gemeinsamer Übertragungspfad für alle Funkkanäle für die nachfolgenden Signale ausgewählt. Dieses als Channel-Pooling bezeichnete Verfahren ist unter anderem aus dem Artikel von J. Mayer, J. Schlee, T. Weber "Protocol and Signalling Aspects of Joint Detection CDMA", PIMRC'97, Helsinki, 1997, Seiten 867-871, bekannt. Das Verfahren des Channel-Poolings wird beispielsweise vorteilhaft eingesetzt, um Kommunikationsverbindungen zu bzw. von Funkstationen mit unterschiedlichen Datenraten realisieren oder auf einer Kommunikationsverbindung mehrere Dienste parallel betreiben zu können.

Einer weiteren Ausgestaltung der Erfindung zufolge wird die verbindungsindividuelle Feinstruktur durch einen CDMA-Kode gebildet. Die für das Mobilfunksystem der dritten Generation UMTS gewählte Teilnehmerseparierungsverfahren, wonach Teilnehmer nach dem jeweiligen CDMA-Kode unterschieden werden, ermöglicht vorteilhaft eine große Anzahl von Funkkanälen in einem breitbandigen Frequenzband und somit eine hohe Ausnutzung der knappen Funkressourcen. Auf dieser Ausgestaltung basierend wird gemäß einer weiteren Ausgestaltung ein TD/CDMA-Verfahren als Teilnehmerseparierungsverfahren verwendet wird. Dabei wird ein Funkkanal durch ein Frequenzband, einen Zeitschlitz und einen CDMA-Kode definiert wird. Besonders vorteilhaft läßt sich dieses Teilnehmerseparierungsverfahren einsetzen, wenn die Signalübertragung gemäß einem TDD-Verfahren durchgeführt wird. Hierbei werden die Signale von der ersten Funkstation zu der zweiten Funkstation und von der zweiten Funkstation zu der ersten Funkstation zeitlich getrennt in einem Frequenzband übertragen werden. Durch die erfindungsgemäße Ausgestaltung kann für jeden Funkkanal eines Zeitschlitzes individuell ein am besten geeigneter Übertragungspfad ermittelt und für die Übertragung von nachfolgenden Signalen verwendet werden.

Zusätzlich zu der Auswahl eines Übertragungspfades können gemäß weiteren Ausgestaltungen der Erfindung bei Verwendung eines TD/CDMA-Teilnehmerseparierungsverfahrens zumindest zwei aufeinanderfolgende Signale unter Veränderung des Zeitschlitzes und/oder unter Veränderung des Frequenzbandes übertragen werden, wobei der jeweils verwendete Zeitschlitz bzw. das jeweils verwendete Frequenzband periodisch und synchron mit dem Zeitprotokoll des Teilnehmerseparierungsverfahrens verändert wird. Diese Ausgestaltungen besitzen den Vorteil einer erhöhten Übertragungsqualität, da hierdurch Störungen, die nur in bestimmten Zeitschlitzen bzw. in einem bestimmten Frequenzband auftreten, durch diese Wechsel nur einen kleinen Teil der übertragenen Signale stören und somit den Empfang nur wenig beeinträchtigen.

Einer weiteren vorteilhaften Weiterbildung der Erfindung zufolge werden die übertragenen Signale in der ersten Funkstation und/oder in der zweiten Funkstation nach einem Joint-Detection-Verfahren empfangen werden. Dieses unter anderem auf dem oben bereits erwähnten Artikel von J. Mayer et. al. bekannte Verfahren ermöglicht eine vorteilhafte Erhöhung der Empfangsqualität, da für die Detektion eines durch eine verbindungsindividuelle Feinstruktur kodierten Signals alle eingesetzten Feinstrukturen verwendet werden.

Der charakteristische Wert kann gemäß einer weiteren Ausgestaltung der Erfindung auf einen Empfangspegel, eine Bitfehlerrate und/oder ein der Signallaufzeit zwischen der ersten Funkstation und der zweiten Funkstation proportionaler Wert und/oder ein Signal-Rausch-Verhältnis bezogen sein. Besonders leicht aus Funk-Kommunikationssystemen zu entnehmende charakteristische Werte sind der Empfangspegel und die Bitfehlerrate (die als skalierte Werte RXLEV, RXQUAL angegeben werden), da sie in der Regel in den derzeitigen Realisierungen bereits vorliegen.

Das erfindungsgemäße Verfahren und die erfindungsgemäße Funkstation werden nun anhand von zeichnerischen Darstellungen näher erläutert. Dabei zeigen
- FIG 1: ein Blockschaltbild eines Funk-Kommunikationssystems, insbesondere eines Mobilfunksystems, und eine Funk-Kommunikationssystemtypische Einsatzumgebung, die durch Mehrwegeausbreitung gekennzeichnet ist,
- FIG 2: eine schematische Darstellung der Rahmenstruktur der Funkschnittstelle und des Aufbaus eines Funkblocks,
- FIG 3: ein Blockschaltbild der erfindungsgemäßen Funkstation als eine Basisstation und eine Mobilstation eines Mobilfunksystems,
- FIG 4: ein Ablaufdiagramm des erfindungsgemäßen Verfahrens für das Funk-Kommunikationssystem gemäß FIG 1, und
- FIG 5: eine zeitliche Darstellung einer beispielhaften Signalübertragung aus der Sicht einer Basisstation eines Mobilfunksystems.

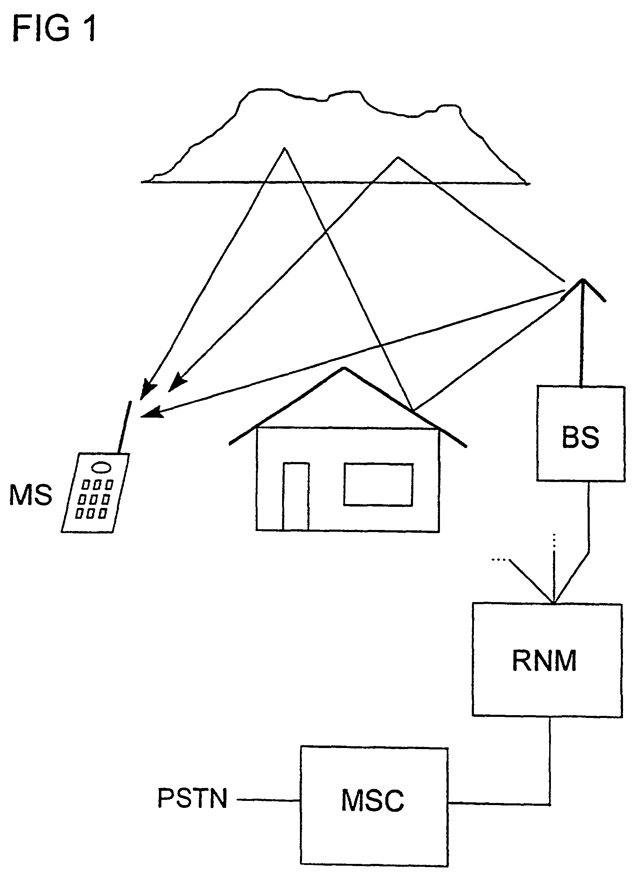

Das in FIG 1 dargestellte und als ein Mobilfunksystem ausgeführte Funk-Kommunikationssystem besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS. Eine solche Basisstation BS ist eine Funkstation, die über eine Funkschnittstelle Verbindungen zu weiteren Funkstationen, wie beispielsweise Mobilstationen MS oder stationären Endgeräten, aufbauen kann. Durch jede Basisstation BS wird zumindest eine Funkzelle gebildet, in dessen Bereich befindliche Funkstationen mit funktechnischen Ressourcen versorgt werden. Bei einer Sektorisierung oder bei hierarchischen Zellstrukturen können pro Basisstation BS auch mehrere Funkzellen versorgt werden.

Unter reellen Einsatzbedingungen für Funk-Kommunikationssysteme sind die Funksignale zwischen der Basisstation BS und der beispielhaft angegebenen Mobilstation MS verschiedenartigsten Störungen ausgesetzt und erreichen die Empfangseinrichtung der Mobilstation MS auf sehr unterschiedlichen Ausbreitungswegen. Außer einem direkten Ausbreitungsweg können die Funksignale auch an Hindernissen wie Bergen, Bäumen, Gebäuden u.ä. reflektiert oder gebeugt werden. In der Empfangseinrichtung überlagern sich die Funksignale der verschiedenen Ausbreitungswege, welches zu Auslöschungseffekten führt, die den Empfang der Funksignale stark beeinträchtigen können. Die Funktionalität der dargestellten Struktur wird von dem Funk-Kommunikationssystem nach der Erfindung genutzt.

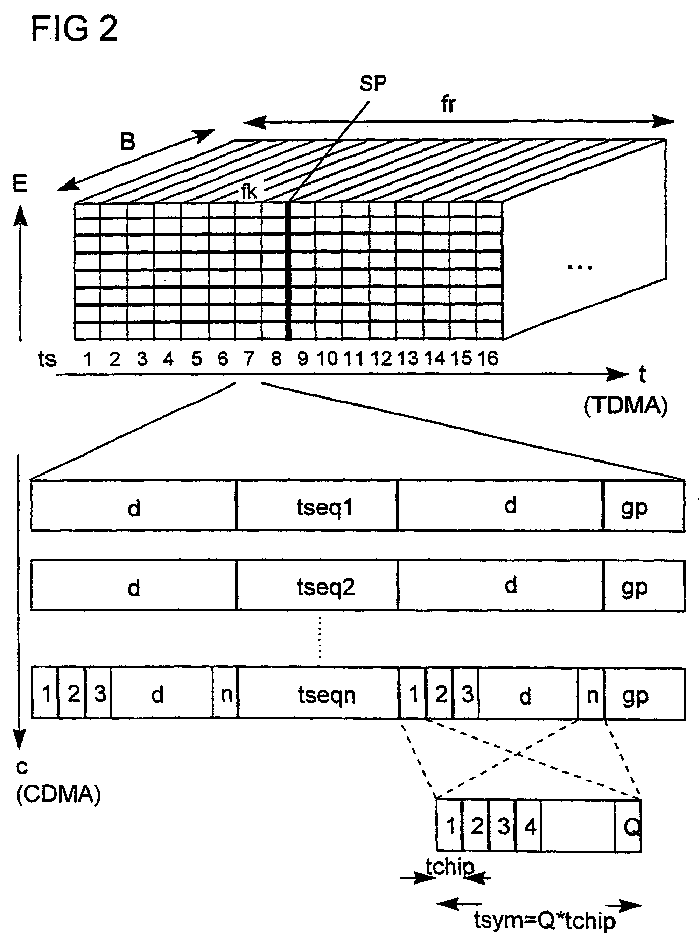

Die Rahmenstruktur der Funkschnittstelle, wie sie in dem Mobilfunksystem der dritten Generation UMTS verwirklicht wird, ist aus der FIG 2 ersichtlich. Gemäß einer TDMA-Komponente ist eine Aufteilung eines breitbandigen Frequenzbereiches, beispielsweise der Bandbreite B = 5 MHz, in mehrere Zeitschlitze ts, beispielsweise 16 Zeitschlitze ts1 bis ts16, vorgesehen. Jeder Zeitschlitz ts innerhalb des Frequenzbandes B bildet einen Frequenzkanal fk. Innerhalb des Frequenzbandes B werden die aufeinanderfolgenden Zeitschlitze ts nach einer Rahmenstruktur gegliedert. So werden beispielsweise 16 Zeitschlitze ts1 b ts16 zu einem Rahmen fr zusammengefaßt.

Bei einer Nutzung eines TDD-Übertragungsverfahrens wird ein Teil der Zeitschlitze ts1 bis ts16 für die Signalübertragung in Aufwärtsrichtung und ein Teil der Zeitschlitze ts1 bis ts16 in Abwärtsrichtung verwendet, wobei die Übertragung in Aufwärtsrichtung beispielsweise zeitlich gesehen vor der Übertragung in Abwärtsrichtung erfolgt. Dazwischen liegt ein Umschaltzeitpunkt SP, durch den die Anzahl der Zeitschlitze, die für die Übertragung in Aufwärtsrichtung genutzt werden und die Anzahl der Zeitschlitze für die Abwärtsrichtung flexibel eingestellt werden kann. Ein Frequenzkanal fk für die Aufwärtsrichtung entspricht in diesem Fall dem Frequenzkanal fk für die Abwärtsrichtung. In gleicher Weise sind die übrigen Frequenzkanäle fk strukturiert.

Innerhalb der Frequenzkanäle fk, die zur Nutzdatenübertragung vorgesehen sind, werden Informationen mehrerer Kommunikationsverbindungen in Funkblöcken übertragen. Diese Funkblöcke zur Nutzdatenübertragung bestehen aus Abschnitten mit Daten d, in denen jeweils Abschnitte mit empfangsseitig bekannten Trainingssequenzen tseql bis tseqn eingebettet sind. Die Daten d sind verbindungsindividuell mit einer Feinstruktur, einem Spreizkode c (CDMA-Kode), gespreizt, so daß empfangsseitig beispielsweise n Verbindungen durch diese CDMA-Komponente separierbar sind.

Die Spreizung von einzelnen Symbolen der Daten d mit Q Chips bewirkt, daß innerhalb der Symboldauer tsym Q Subabschnitte der Dauer tchip übertragen werden. Die Q Chips bilden dabei den individuellen CDMA-Kode c. Weiterhin ist innerhalb des Zeitschlitzes ts eine Schutzzeit gp zur Kompensation unterschiedlicher Signallaufzeiten der Verbindungen aufeinanderfolgender Zeitschlitze ts vorgesehen.

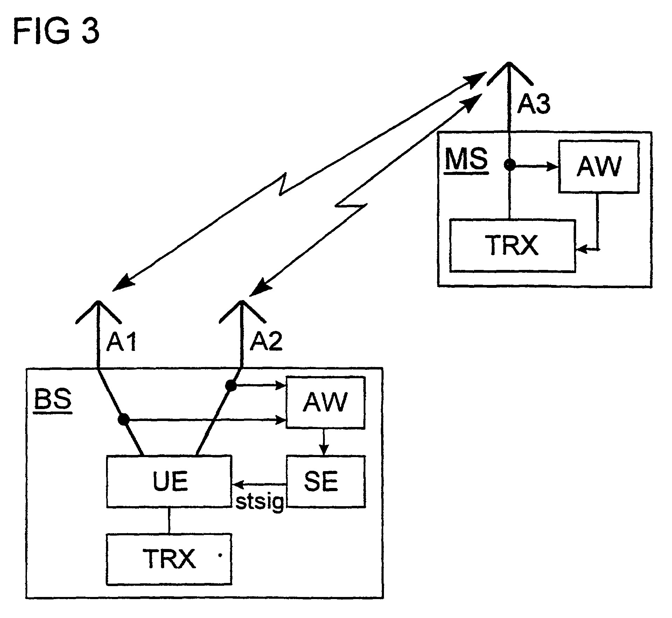

In der FIG 3 sind beispielhaft zwei Funkstationen angegeben, die als eine Basisstation BS und als eine Mobilstation MS eines Mobilfunksystems ausgestaltet sind. Zwischen den beiden Funkstationen BS und MS besteht eine Funkverbindung zur Signalübertragung. Die Basisstation BS ist mit zwei Antenneneinrichtungen A1 und A2 und einer Sende-/Empfangseinrichtung TRX ausgestattet, über die sie Nutz- und Signalisierungsinformationen senden und empfangen kann. Einer zusätzlich in der Basisstation BS verwirklichten Auswerteeinrichtung AW werden aus dem jeweiligen Empfangspfad der beiden Antenneneinrichtungen A1 und A2 ausgekoppelte Signale zugeführt und daraus jeweils charakteristische Werte bezüglich der Übertragungsbedingungen der Funkschnittstelle bestimmt. Derartige charakteristische Werte, die sich gegebenenfalls erst nach internen Umrechnungen in der Auswerteeinrichtung AW ergeben, sind beispielsweise der Empfangspegel RXLEV, eine skalierte Größe zur Bitfehlerrate RXQUAL, eine Vorhaltezeit ta oder ein Signal-Rausch-Verhältnis C/I. Die charakteristischen Werte RXLEV, RXQUAL können wie in dem GSM-Mobilfunksystem beispielsweise von der Mobilstation MS signalisiert werden, währenddessen die Angabe zur Signallaufzeit in Form der Vorhaltezeit ta und die Angaben zum Signal-Rausch-Verhältnis C/I in der Basisstation BS selbst aus den Empfangssignalen gewonnen werden können.

Die für den jeweiligen Empfangspfad ermittelten charakteristischen Werte werden einer der Auswerteeinrichtung AW nachgeschalteten Steuereinrichtung SE zugeführt, die einen Vergleich von jeweils einander entsprechenden charakteristischen Werten vornimmt. Aus diesem Vergleich leitet die Steuereinrichtung SE ein Steuersignal stsig ab und steuert damit eine Umschalteeinrichtung UE an, die nachfolgend von der Sende/Empfangseinrichtung TRX in Funkkanälen zu sendende Signale zu einer der Antenneneinrichtungen A1 oder A2 schaltet. Ein Schalten der Signale kann dabei für den Sendefall unabhängig von dem Empfangsfall durchgeführt werden, d.h. die von der Mobilstation MS gesendeten Signale werden beispielsweise über beide Antenneneinrichtungen A1 und A2 empfangen und der Sende-/Empfangseinrichtung TRX zugeführt. Dieses wird erfindungsgemäß vorteilhaft eingesetzt, wenn der Empfang der Funkkanäle in der Basisstation BS unter Verwendung eines Joint-Detection-Verfahrens durchgeführt wird.

Verschiedene Szenarien für die Ermittlung der charakteristischen Werte und der Ableitung des Steuersignals stsig sind denkbar. Dieses kann gemäß einem ersten Beispiel in der Weise geschehen, daß die Mobilstation MS ein Signal in einem zugewiesenen Funkkanal sendet, welches von den beiden Antenneneinrichtungen A1 und A2 nach einem Diversitätsprinzip empfangen wird. Aus diesem empfangenen Signal bestimmt die Auswerteeinrichtung AW die jeweiligen charakteristischen Werte für die nachfolgende Ermittlung, welcher Übertragungspfad bzw. welche Antenneneinrichtung A1 oder A2 bessere Übertragungsbedingungen ermöglicht. Aus dieser auf den Empfangsfall bezogenen Ermittlung kann auf den Sendefall zurückgeschlossen werden, da die Übertragungsbedingungen für den Sende- und Empfangsfall in der Regel identisch sind. Die Steuereinrichtung SE in der Basisstation BS wählt diejenige Antenneneinrichtung A1 bzw. A2 aus, über die Signale in dem gleichen Funkkanal nachfolgend in Abwärtsrichtung gesendet werden.

Ein zweites Beispiel zeigt eine weitere Möglichkeit auf. Dabei wird von der Basisstation BS zeitlich getrennt jeweils ein Signal in einem Funkkanal zu der Mobilstation MS übertragen. Die zeitliche Trennung ist dadurch bedingt, daß die Mobilstation MS nur über eine Antenneneinrichtung A3 verfügt und somit nicht in der Lage ist, zwei Signale in dem gleichen Funkkanal gleichzeitig zu empfangen. Die Mobilstation MS ist dabei mit einer Auswerteeinrichtung AW ausgestattet, in der sie charakteristische Werte bezüglich der Übertragungsverhältnisse auf dem jeweiligen Übertragungspfad bestimmen kann. Diese ermittelten charakteristischen Werte sendet die Mobilstation MS nachfolgend beispielsweise über eine Inbandsignalisierung zu der Basisstation BS, in der die Werte der Steuereinrichtung SE zugeführt werden, die daraus das Steuersignal stsig für die Ansteuerung der Umschalteeinrichtung UE ableitet.

Gemäß einem dritten Beispiel kann die Mobilstation MS zusätzlich mit einer Steuereinrichtung SE ausgestattet sein, wodurch sie direkt aus den in der Auswerteeinrichtung AW ermittelten charakteristischen Werten ein Steuersignal stsig ableitet und dieses zu der Basisstation BS überträgt, wobei die Umschalteeinrichtung UE durch dieses Steuersignal stsig angesteuert wird.

Weiterhin ist denkbar, daß sowohl in der Basisstation BS als auch in der Mobilstation MS charakteristische Werte bezüglich der Übertragungsverhältnisse für den Funkkanal ermittelt werden und diese Werte der Steuereinrichtung SE in der Basisstation BS zugeführt werden, wodurch eine genauere Einschätzung der realen Übertragungsbedingungen auf der Funkschnittstelle getroffen werden kann.

Die Ermittlung der charakteristischen Werte sollte in einem Funk-Kommunikationssystem mit einer TD/CDMA-Teilnehmerseparierung für jeden Funkkanal eines Zeitschlitzes separat durchgeführt werden, da durch die unterschiedlichen CDMA-Spreizkodes c, durch die Funkkanäle in einem Zeitschlitz ts unterschieden werden, auch unterschiedliche Übertragungsverhältnisse auftreten können. Für den Fall, daß für die Signalübertragung zwischen der Basisstation BS und der Mobilstation MS beispielsweise nach dem Prinzip des Channel-Poolings, wie es in der Beschreibungseinleitung bereits erläutert wurde, mehrere Funkkanäle in einem Zeitschlitz ts zugewiesen werden, werden für jeden Funkkanal gesondert charakteristische Werte ermittelt und jeweils von der Basisstation BS zu sendende Signale über die Antenneneinrichtung A1 bzw. A2 mit den besseren Übertragungsbedingungen gesendet. Bei einer Zuweisung von Funkkanälen eines Zeitschlitzes ts zu mehreren Mobilstationen MS wird gemäß dieser Ausgestaltung für jeden Funkkanal der günstigste Übertragungspfad ausgewählt. In Abhängigkeit von der ausgewählten Antenneneinrichtung A1, A2, über die nachfolgende Signale in dem jeweiligen Funkkanal gesendet werden sollen, kann gleichsam eine Regelung der Sendeleistung für jeden Zeitschlitz ts und CDMA-Kode c separat durchgeführt werden.

Das erfindungsgemäße Verfahren läßt sich in gleicher Weise beispielsweise auch auf CDMA-Teilnehmerseparierungsverfahren anwenden, bei denen ein Funkkanal jeweils durch das Frequenzband B und einen CDMA-Kode c definiert wird. Hierbei werden beispielsweise in periodischen Zeitabständen jeweils charakteristische Werte ermittelt und ein Übertragungspfad für den Funkkanal ausgewählt.

Eine Vereinfachung des erfindungsgemäßen Verfahrens ist dadurch möglich, daß beispielsweise mehrere Funkkanäle, die einer einzigen Kommunikationsverbindung zwischen der Basisstation BS und einer Mobilstation MS nach dem Prinzip des Channel-Poolings zugewiesen wurden, nur jeweils über eine Antenneneinrichtung A1 bzw. A2 der Basisstation BS gesendet werden, wenn die Unterschiede der Übertragungsverhältnisse aufgrund des unterschiedlichen CDMA-Kodes c nicht signifikant sind. Hierdurch wird ebenfalls die Regelung der Sendeleistung für die Übertragung zu den einzelnen Mobilstationen MS vereinfacht.

Sollte sich bei der Bestimmung der charakteristischen Werte für die Empfangspfade herausstellen, daß die Differenz zwischen den jeweils bestimmten charakteristischen Werten der beiden Empfangspfade der Antenneneinrichtungen A1, A2 einen vorgegebenen Schwellwert nicht überschreitet, d.h. die Übertragungsverhältnisse für beide Pfade beispielsweise nahezu identisch sind, kann eine gesicherte Signalübertragung durch einen periodischen Wechsel zwischen den Antenneneinrichtung A1, A2 für den Sendefall der Basisstation BS erreicht werden. Hierdurch entstehen aufeinanderfolgende, dekorrelierte Signale am Ort der Mobilstation MS, wodurch die Übertragungsqualität bei auftretenden Störungen auf der Funkschnittstelle vorteilhaft erhöht wird.

Zur zusätzlichen Dekorrelation von aufeinanderfolgenden Signalen besteht weiterhin die Möglichkeit, beispielsweise einen Wechsel des Zeitschlitzes ts unter Beibehaltung des zugewiesenen CDMA-Kodes c durchzuführen, wenn in bestimmten Zeitschlitzen ts wiederholt Übertragungsprobleme auftreten. Eine weitere Möglichkeit besteht darin, für den Fall, daß dem Funk-Kommunikationssystem mehrere Frequenzbänder B zur Verfügung stehen, einen Wechsel zwischen den Frequenzbändern B in der Art eines Frequenzsprungverfahrens durchzuführen.

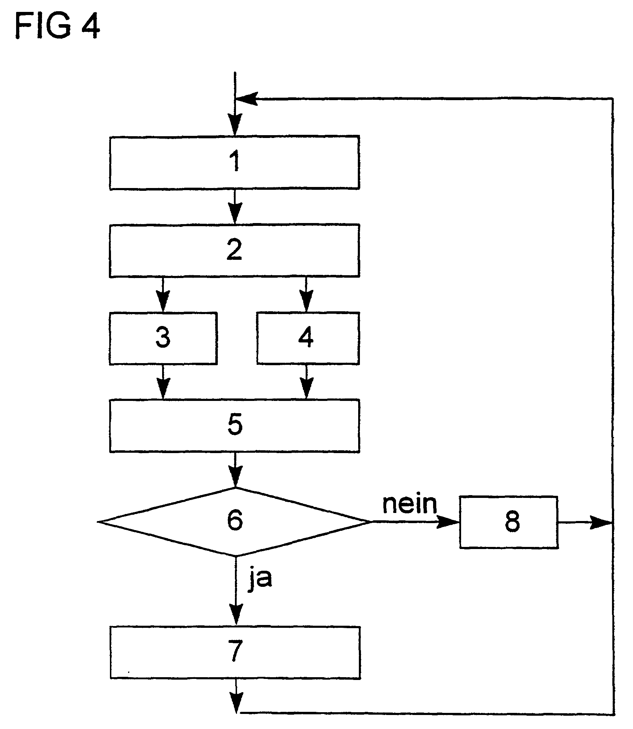

In der FIG 4 ist ein beispielhaftes Ablaufdiagramm einer Ausgestaltung des erfindungsgemäßen Verfahrens dargestellt. In dem durch die Zahl 1 gekennzeichneten Feld des Ablaufdiagramms wird beispielhaft ein Signal zwischen von der Mobilstation MS zu der Basisstation BS über die Funkschnittstelle gesendet. Das gesendete Signal wird beispielsweise in einem zugewiesenen Funkkanal übertragen. Das Feld mit der Kennzeichnung 2 repräsentiert den Empfang des gesendeten Signals in der Basisstation BS über zwei Antenneneinrichtungen A1 und A2 gemäß einem Diversitätsempfang. Aus dem über die jeweilige Antenneneinrichtung A1 und A2 empfangenen Signal werden gemäß den Feldern 3 und 4 charakteristische Werte bezüglich der Übertragungsverhältnisse auf der Funkschnittstelle für die jeweiligen Übertragungspfade bestimmt. Die ermittelten und einander entsprechenden charakteristischen Werte werden in dem Feld 5 miteinander verglichen, wie es beispielsweise in einer Auswerteeinrichtung AW der Basisstation BS durchgeführt werden kann. Abhängig von dem Typ der charakteristischen Werte wird in dem Entscheidungsfeld 6 die Entscheidung nach den besseren Übertragungsverhältnissen getroffen. Sind die Übertragungsverhältnisse für den Übertragungspfad über die erste Antenneneinrichtung A1 besser als die Übertragungsverhältnisse über die zweite Antenneneinrichtung A2, so wird in dem Feld 7 ein Schalten der nachfolgend zu sendenden Signale in dem Funkkanal über die erste Antenneneinrichtung A1 zu der Mobilstation MS vollzogen. Sind dahingegen die Übertragungsverhältnisse über die zweite Antenneneinrichtung A2 besser, so werden gemäß Feld 8 nachfolgend von der Basisstation BS zu sendende Signale über die zweite Antenneneinrichtung A2 gesendet.

Zusätzlich zu dem Verfahrensschema der FIG 4 kann die Abfolge beispielsweise durch eine Abfrage der Differenz zwischen den bestimmten charakteristischen Werten der Empfangspfade ergänzt werden. Überschreitet diese Differenz einen vorgegebenen Schwellwert nicht, so werden nachfolgend zu sendende Signale abwechselnd zu jeweils einer Antenneneinrichtung A1 bzw. A2 gemäß einem Antennensprungverfahren geschaltet, wodurch vorteilhaft eine Dekorrelation von gesendeten Signalen hervorgerufen wird. Die Auswertung des von der Mobilstation MS gesendeten Signals kann dabei durch einen Zeitgeber gesteuert werden, der dem Teilnehmerseparierungsverfahren angepaßt bzw. mit diesem synchronisiert ist.

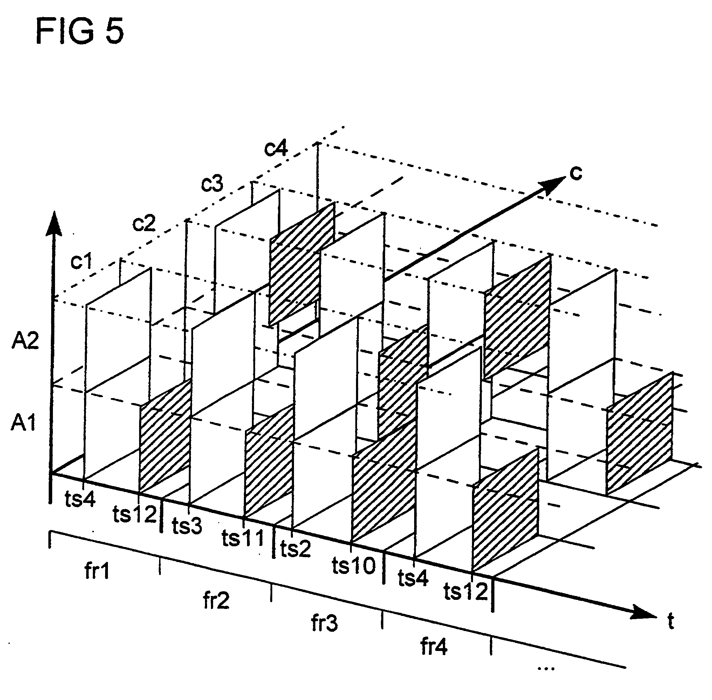

Die FIG 5 zeigt ein dreidimensionales Diagramm, in dem beispielhaft eine Signalübertragung gemäß der Erfindung in einem Funk-Kommunikationssystem mit einer TD/CDMA-Teilnehmerseparierung und einer Trennung der Auf- und Abwärtsrichtung gemäß einem TDD-Verfahren durchgeführt wird. In der horizontalen Ebene ist einerseits die Zeit t aufgetragen, die gemäß dem TDMA-Teilnehmerseparierungsverfahren in Rahmen fr1 bis fr4 aufgeteilt ist. Jeder Rahmen fr1 bis fr4 ist in beispielsweise 16 Zeitschlitze ts1 bis ts16 unterteilt. Die Auf- und Abwärtsrichtung wird, wie bereits zu der FIG 2 erläutert wurde, durch einen Umschaltzeitpunkt SP getrennt, so daß innerhalb eines Rahmens fr sowohl in Aufwärts- als auch in Abwärtsrichtung gesendet wird. Desweiteren wird in der horizontalen Ebene eine Unterscheidung nach CDMA-Kodes c gemacht. Beispielhaft sind vier mögliche CDMA-Kodes c1 bis c4 dargestellt, die eine Trennung in vier Funkkanäle innerhalb eines Zeitschlitzes ts bei Verwendung eines Frequenzbandes b ermöglichen. In vertikaler Richtung sind beispielhaft zwei Antenneneinrichtungen A1 und A2 aufgetragen, über die die Signale von der Basisstation BS gesendet werden können.

Dem Beispiel der FIG 5 liegt zugrunde, daß einer Kommunikationsverbindung zwischen einer Basisstation BS, die zwei Antenneneinrichtungen A1 und A2 aufweist, und einer Mobilstation MS, nach dem Prinzip des Channel-Poolings zwei Funkkanäle zugewiesen wurden. Das Diagramm zeigt dabei die Vorgänge des Empfangens und Sendens aus der Sicht der Basisstation BS. Diese beispielhaft angegebene Konfiguration entspricht der FIG 3. Die zugeteilten Funkkanäle sind in der Ausgangssituation in dem ersten Rahmen fr1 durch den Zeitschlitz ts4 für die Aufwärtsrichtung und durch den Zeitschlitz ts12 für die Abwärtsrichtung, sowie durch die CDMA-Kodes c1 und c3 definiert. In der Aufwärtsrichtung sendet demnach die Mobilstation MS in dem ersten Rahmen fr1 Signale in dem Zeitschlitz ts4 unter Verwendung der CDMA-Kodes c1 und c3 zu der Basisstation BS. Die gesendeten Signale werden über die Antenneneinrichtungen A1 und A2 der Basisstation BS empfangen und für jeden Empfangszweig und Funkkanal charakteristische Werte bezüglich der jeweiligen Übertragungsverhältnisse der Funkschnittstelle bestimmt. Als Ergebnis der Auswertung in der Auswerteeinrichtung AW der Basisstation BS werden die in Abwärtsrichtung zu sendenden Signale zu jeweils einer Antenneneinrichtung A1 bzw. A2 geschaltet. Die Basisstation BS sendet beispielsweise in dem für die Abwärtsrichtung in dem ersten Rahmen fr1 vorgesehenen Zeitschlitz ts12 Signale in dem durch den ersten CDMA-Kode c1 gekennzeichneten Funkkanal über die erste Antenneneinheit A1, wenn für die erste Antenneneinrichtung A1 günstigere Übertragungseigenschaften ermittelt wurden (schraffierte Flächen). Die Bestimmung der charakteristischen Werte kann beispielsweise in jedem Rahmen fr1 bis fr4 vorgenommen werden. Dabei wird für diesen Funkkanal in dem Beispiel in jedem Rahmen fr1 bis fr4 die Antenneneinrichtung A1 für die Übertragung verwendet.

Für den durch den dritten CDMA-Kode c3 gekennzeichneten Funkkanal werden charakteristische Werte für die beiden Empfangswege ermittelt, deren Differenz einen vorgegebenen Schwellwert nicht überschreitet. Um aufgrund dieser Tatsache eine vorteilhafte Dekorrelation von Signalen zweier aufeinanderfolgender Rahmen fr1, fr2 zu erhalten, werden die Signale des Funkkanals abwechselnd jeweils zu der zweiten A2 und zu der ersten Antenneneinrichtung A1 geschaltet, wie in dem Diagramm dargestellt ist. Zusätzlich ist in dem Diagramm eine Folge des Wechsels der Zeitschlitze ts zwischen den einzelnen Rahmen fr1 bis fr4 eingezeichnet, welches auch als Zeitschlitzsprungverfahren bezeichnet werden kann. Dabei wird der jeweils für die Aufwärtsrichtung bzw. Abwärtsrichtung verwendete Zeitschlitz ts unter Beibehaltung des CDMA-Kodes c gemäß einem vorgegebenen Algorithmus oder Zeitfolge verändert, wodurch Störungen, die jeweils nur in bestimmten Zeitschlitzen ts auftreten, in ihren Auswirkungen auf die Empfangsqualität abgeschwächt werden können.

## Patentansprüche

1. Verfahren zur Signalübertragung über eine Funkschnittstelle in einem Funk-Kommunikationssystem, das
- ein Teilnehmerseparierungsverfahren zur Unterscheidung von Signalen nutzt, wobei ein Funkkanal zumindest durch ein Frequenzband (B) und eine verbindungsindividuelle Feinstruktur (c) definiert ist,
bei dem.
- zumindest ein Funkkanal für die Signalübertragung zwischen einer ersten Funkstation (BS) und einer zweiten Funkstation (MS) zugewiesen wird,
- zumindest ein Signal über mindestens zwei Übertragungspfade übertragen wird,
- für jeden Übertragungspfad zumindest ein charakteristischer Wert (RXLEV, RXQUAL, ta, C/I) bezüglich der Übertragungsverhältnisse auf der Funkschnittstelle bestimmt wird,
- aus einem Vergleich der einander entsprechenden charakteristischen Werte (RXLEV, RXQUAL, ta, C/I) ein Steuersignal (stsig) abgeleitet wird, durch das der Übertragungspfad individuell für den Funkkanal zur Übertragung eines nachfolgenden Signals ausgewählt wird, wobei für den Fall, daß eine Differenz zwischen den charakteristischen Werten (RXLEV, RXQUAL, ta, C/I) einen vorgegebenen Schwellwert nicht überschreitet, periodisch wechselnd jeweils ein Übertragungspfad ausgewählt wird, so daß zumindest zwei aufeinanderfolgende, dekorrelierte Signale über unterschiedliche Übertragungspfade übertragen werden.

2. Verfahren nach Anspruch 1, bei dem
- das Signal von der zweiten Funkstation (MS) gesendet und über zumindest zwei Antenneneinrichtungen (A1, A2) der ersten Funkstation (BS) gemäß einem Diversitätsempfang empfangen wird,
- die charakteristischen Werte (RXLEV, RXQUAL, ta, C/I) aus dem von der jeweiligen Antenneneinrichtung (A1, A2) empfangenen Signal bestimmt werden, und
- durch das aus dem Vergleich der einander entsprechenden charakteristischen Werten (RXLEV, RXQUAL, ta, C/I) abgeleitete Steuersignal (stsig) eine Umschalteeinrichtung (UE) angesteuert wird, die ein nachfolgendes Signal individuell für den Funkkanal zu einer der Antenneneinrichtungen (A1, A2) der ersten Funkstation (BS) schaltet.

3. Verfahren nach Anspruch 1, wobei
das Signal zeitlich getrennt über jeweils einen Übertragungspfad übertragen wird.

4. Verfahren nach Anspruch 3, bei dem
- das zeitlich getrennte Signal von jeweils einer Antenneneinrichtung (A1, A2) der ersten Funkstation (BS) gesendet und von der zweiten Funkstation (MS) empfangen wird,
- die charakteristischen Werte (RXLEV, RXQUAL, ta, C/I) aus dem jeweils empfangenen Signal bestimmt werden, und
- aus dem Vergleich der einander entsprechenden charakteristischen Werten (RXLEV, RXQUAL, ta, C/I) das Steuersignal (stsig) abgeleitet wird, durch das eine Umschalteeinrichtung (UE) angesteuert wird, die ein nachfolgendes Signal individuell für den Funkkanal zu einer der Antenneneinrichtungen (A1, A2) der ersten Funkstation (BS) schaltet.

5. Verfahren nach Anspruch 4, wobei
die bestimmten charakteristischen Werte (RXLEV, RXQUAL, ta, C/I) zu der ersten Funkstation (BS) übertragen und aus diesen das Steuersignal (stsig) abgeleitet wird.

6. Verfahren nach Anspruch 4, wobei
das Steuersignal (stsig) in der zweiten Funkstation (MS) abgeleitet und zu der ersten Funkstation (BS) übertragen wird.

7. Verfahren nach Anspruch 5 oder 6, bei dem
die Übertragung der charakteristischen Werte (RXLEV, RXQUAL, ta, C/I) bzw. des Steuersignals (stsig) gemäß einer Inbandsignalisierung erfolgt.

8. Verfahren nach einem vorhergehenden Anspruch, bei dem für den Fall, daß eine Differenz zwischen den bestimmten und einander entsprechenden charakteristischen Werten (RXLEV, RXQUAL, ta, C/I) einen vorgegebenen Schwellwert nicht überschreitet, periodisch wechselnd jeweils ein Übertragungspfad ausgewählt wird, so daß zumindest zwei aufeinanderfolgende, dekorrelierte Signale über unterschiedliche Übertragungspfade übertragen werden.

9. Verfahren nach einem vorhergehenden Anspruch, wobei die verbindungsindividuelle Feinstruktur durch einen CDMA-Kode (c) gebildet wird.

10. Verfahren nach Anspruch 9, bei dem
als Teilnehmerseparierungsverfahren ein TD/CDMA-Verfahren verwendet wird, wobei ein Funkkanal durch ein Frequenzband (B), einen Zeitschlitz (ts) und-einen CDMA-Kode definiert wird.

11. Verfahren nach Anspruch 10, bei dem
die Signalübertragung gemäß einem TDD-Verfahren durchgeführt wird, wobei die Signale von der ersten Funkstation (BS) zu der zweiten Funkstation (MS) und von der zweiten Funkstation (MS) zu der ersten Funkstation (BS) zeitlich getrennt in einem Frequenzband (B) übertragen werden.

12. Verfahren nach Anspruch 10 oder 11, bei dem
zumindest zwei aufeinanderfolgende Signale unter Veränderung des Zeitschlitzes (ts) übertragen werden, wobei der für die Übertragung verwendete Zeitschlitz (ts) periodisch und synchron mit dem Zeitprotokoll des Teilnehmerseparierungsverfahrens verändert wird.

13. Verfahren nach einem vorhergehenden Anspruch, bei dem zumindest zwei aufeinanderfolgende Signale unter Veränderung des Frequenzbandes (B) übertragen werden, wobei das für die Übertragung verwendete Frequenzband (B) periodisch und synchron mit dem Zeitprotokoll des Teilnehmerseparierungsverfahrens verändert wird.

14. Verfahren nach einem vohergehenden Anspruch, bei dem die übertragenen Signale in der ersten Funkstation (BS) und/oder in der zweiten Funkstation (MS) nach einem Joint-Detection-Verfahren empfangen werden.

15. Verfahren nach einem vohergehenden Anspruch, bei dem als charakteristischer Wert (RXLEV, RXQUAL, ta, C/I) ein Empfangspegel, eine Bitfehlerrate und/oder ein der Signallaufzeit (ta) zwischen der ersten Funkstation (BS) und der zweiten Funkstation (MS) proportionaler Wert und/oder ein Signal-Rausch-Verhältnis bestimmt wird.

16. Funkstation (BS, MS) zur Signalübertragung über eine Funkschnittstelle in einem Funk-Kommunikationssystem, das
- ein Teilnehmerseparierungsverfahren zur Unterscheidung von Signalen nutzt, wobei ein Funkkanal zumindest durch ein Frequenzband (B) und eine verbindungsindividuelle Feinstruktur (c) definiert ist,
mit
- zumindest einer Antenneneinrichtung (A1, A2) zum Empfangen und/oder Senden zumindest eines Signals, das über zumindest zwei Übertragungspfade übertragen wird,
- einer Auswerteeinrichtung (AW) zum Bestimmen zumindest eines charakteristischen Wertes (RXLEV, RXQUAL, ta, C/I) bezüglich der Übertragungsverhältnisse auf der Funkschnittstelle für jeden Übertragungspfad,
- einer Steuereinrichtung (SE) zum Ableiten eines Steuersignals (stsig) aus einem Vergleich der einander entsprechenden charakteristischen Werte (RXLEV, RXQUAL, ta, C/I), und aus einem Vergleich einer Differenz zwischen den charakteristischen Werten (RXLEV, RXQUAL, ta, C/I) mit einem vorgegebenen Schwellwert, und
- einer durch das Steuersignal (sig) angesteuerten Umschalteeinrichtung (UE), die den Übertragungspfad individuell für den Funkkanal zur Übertragung eines nachfolgenden Signals auswählt, wobei für den Fall, daß die Differenz zwischen den charakteristischen Werten (RXLEV, RXQUAL, ta, C/I) den vorgegebenen Schwellwert nicht überschreitet, die Umschalteeinrichtung (UE) periodisch wechselnd jeweils einen Übertragungspfad auswählt, so daß zumindest zwei aufeinanderfolgende, dekorrelierte Signale über unterschiedliche Übertragungspfade übertragen werden.

17. Funkstation (BS, MS) nach Anspruch 16,
die als eine Basisstation eines Mobilfunksystems ausgestaltet ist.

18. Funkstation (BS, MS) nach Anspruch 16,
die als eine Mobilstation eines Mobilfunksystems ausgestaltet ist.

## Claims

1. Method for signal transmission by way of a radio interface in a radio communication system which
- utilises a subscriber separation method in order to differentiate signals, whereby one radio channel is defined at least by means of a frequency band (B) and a connection-specific fine structure (c),
in which
- at least one radio channel is assigned for the signal transmission between a first radio station (BS) and a second radio station (MS),
- at least one signal is transmitted by way of at least two transmission paths,
- at least one characteristic value (RXLEV, RXQUAL, ta, C/I) is determined for each transmission path with respect to the transmission conditions on the radio interface,
- by performing a comparison of the characteristic values (RXLEV, RXQUAL, ta, C/I) corresponding to one another, a control signal (stsig) is derived, by means of which the transmission path is selected individually for the radio channel for the transmission of a subsequent signal, whereby for the situation in which a difference between the characteristic values (RXLEV, RXQUAL, ta, C/I) does not exceed a predefined threshold value a transmission path is selected at any one time with periodic switching in order that at least two successive decorrelated signals are transmitted by way of different transmission paths.

2. Method according to Claim 1, in which
- the signal is sent by the second radio station (MS) and received by way of at least two antenna devices (A1, A2) of the first radio station (BS) in accordance with a diversity reception principle,
- the characteristic values (RXLEV, RXQUAL, ta, C/I) are determined from the signal received by the relevant antenna device (A1, A2), and
- a changeover device (UE) which switches a subsequent signal individually for the radio channel to one of the antenna devices (A1, A2) of the first radio station (BS) is controlled by means of the control signal (stsig) derived from the comparison of the characteristic values (RXLEV, RXQUAL, ta, C/I) corresponding to one another.

3. Method according to Claim 1, whereby the signal is transmitted separated in time by way of one transmission path at any one time.

4. Method according to Claim 3, in which
- the signal separated in time is sent by one antenna device (A1, A2) of the first radio station (BS) in each case and received by the second radio station (MS),
- the characteristic values (RXLEV, RXQUAL, ta, C/I) from the signal received in each case are determined, and
- from the comparison of the characteristic values (RXLEV, RXQUAL, ta, C/I) corresponding to one another the control signal (stsig) is derived which serves to control a changeover device (UE) which switches a subsequent signal individually for the radio channel to one of the antenna devices (A1, A2) of the first radio station (BS).

5. Method according to Claim 4, whereby the particular characteristic values (RXLEV, RXQUAL, ta, C/I) are transmitted to the first radio station (BS) and the control signal (stsig) is derived from these.

6. Method according to Claim 4, whereby the control signal (stsig) is derived in the second radio station (MS) and is transmitted to the first radio station (BS).

7. Method according to Claim 5 or 6, in which the transmission of the characteristic values (RXLEV, RXQUAL, ta, C/I) or of the control signal (stsig) is performed according to an inband signalling process.

8. Method according to one of the preceding claims, in which for the situation in which a difference between the determined characteristic values (RXLEV, RXQUAL, ta, C/I) corresponding to one another does not exceed a predefined threshold value a transmission path is selected at any one time with periodic switching in order that at least two successive decorrelated signals are transmitted by way of different transmission paths

9. Method according to one of the preceding claims, whereby the connection-specific fine structure is formed by means of a CDMA code (c).

10. Method according to Claim 9, in which a TD/CDMA method is used as the subscriber separation method, whereby a radio channel is defined by a frequency band (B), a time slot (ts) and a CDMA code.

11. Method according to Claim 10, in which the signal transmission is carried out in accordance with a TDD method, whereby the signals are transmitted from the first radio station (BS) to the second radio station (MS) and from the second radio station (MS) to the first radio station (BS), separated in time in one frequency band (B).

12. Method according to Claim 10 or 11, in which at least two successive signals are transmitted by modifying the time slot (ts), whereby the time slot (ts) used for the transmission is modified periodically and in synchronism with the timing protocol for the subscriber separation method.

13. Method according to one of the preceding claims, in which at least two successive signals are transmitted by modifying the frequency band (B), whereby the frequency band (B) used for the transmission is modified periodically and in synchronism with the timing protocol for the subscriber separation method.

14. Method according to one of the preceding claims, in which the transmitted signals are received in the first radio station (BS) and/or in the second radio station (MS) in accordance with a joint detection method.

15. Method according to one of the preceding claims, in which a receive level, a bit error rate and/or a value which is proportional to the signal propagation delay (ta) between the first radio station (BS) and the second radio station (MS) and/or a signal to noise ratio is determined as the characteristic value (RXLEV, RXQUAL, ta, C/I).

16. Radio station (BS, MS) for signal transmission by way of a radio interface in a radio communication system which
- utilises a subscriber separation method in order to differentiate signals, whereby one radio channel is defined at least by means of a frequency band (B) and a connection-specific fine structure (c),
with
- at least one antenna device (A1, A2) for receiving and/or sending at least one signal which is transmitted by way of at least two transmission paths,
- an evaluation device (AW) for determining at least one characteristic value (RXLEV, RXQUAL, ta, C/I) with reference to the transmission conditions on the radio interface for each transmission path,
- a control device (SE) for deriving a control signal (stsig) from a comparison of the characteristic values (RXLEV, RXQUAL, ta, C/I) corresponding to one another, and from a comparison of a difference between the characteristic values (RXLEV, RXQUAL, ta, C/I) with a predefined threshold value, and
- a changeover device (UE) controlled by the control signal (sig) which selects the transmission path individually for the radio channel for the transmission of a subsequent signal, whereby for the situation in which the difference between the characteristic values (RXLEV, RXQUAL, ta, C/I) does not exceed the predefined threshold value the changeover device (UE) selects a transmission path at any one time with periodic switching in order that at least two successive decorrelated signals are transmitted by way of different transmission paths.

17. Radio station (BS, MS) according to Claim 16, which is configured as a base station of a mobile radio system.

18. Radio station (BS, MS) according to Claim 16, which is configured as a mobile station of a mobile radio system.

## Revendications

1. Procédé pour la transmission de signal par le biais d'une interface radio dans un système de radiocommunication qui
- emploie un procédé de séparation des abonnés pour différencier les signaux, un canal de radiocommunication étant défini au moins par une bande de fréquences (B) et une structure fine spécifique à la liaison (c),
avec lequel
- au moins un canal de radiocommunication est affecté à la transmission du signal entre une première station radio (BS) et une deuxième station radio (MS),
- au moins un signal est transmis par le biais d'au moins deux chemins de transmission,
- au moins une valeur caractéristique (RXLEV, RXQUAL, ta, C/I) concernant les conditions de transmission sur l'interface de radiocommunication est déterminée pour chaque chemin de transmission,
- un signal de commande (stsig) est dérivé d'une comparaison des valeurs caractéristiques correspondant entre elles (RXLEV, RXQUAL, ta, C/I) par le biais duquel le chemin de transmission est sélectionné individuellement pour le canal de radiocommunication destiné à la transmission d'un signal suivant, un chemin de transmission étant à chaque fois sélectionné en changeant périodiquement dans le cas où une différence entre les valeurs caractéristiques (RXLEV, RXQUAL, ta, C/I) ne dépasse pas une valeur de seuil prédéfinie de manière à ce qu'au moins deux signaux successifs décorrélés soient transmis par le biais de chemins de transmission différents.

2. Procédé selon la revendication 1, dans lequel
- le signal est émis par la deuxième station radio (MS) et reçu par le biais d'au moins deux dispositifs d'antenne (A1, A2) de la première station radio (BS) selon un procédé de réception par diversité,
- les valeurs caractéristiques (RXLEV, RXQUAL, ta, C/I) sont déterminées à partir du signal reçu par le dispositif d'antenne (A1, A2) correspondant, et
- un dispositif de commutation (UE) est commandé par le signal de commande (stsig) dérivé de la comparaison des valeurs caractéristiques (RXLEV, RXQUAL, ta, C/I) correspondant entre elles, lequel commute un signal suivant individuellement pour le canal de radiocommunication vers l'un des dispositifs d'antenne (A1, A2) de la première station radio (BS).

3. Procédé selon la revendication 1, dans lequel le signal est transmis séparément dans le temps à chaque fois par le biais d'un chemin de transmission.

4. Procédé selon la revendication 3, avec lequel
- le signal séparé dans le temps est à chaque fois émis par un dispositif d'antenne (A1, A2) de la première station radio (BS) et reçu par la deuxième station radio (MS),
- les valeurs caractéristiques (RXLEV, RXQUAL, ta, C/I) sont déterminées à partir du signal reçu correspondant, et
- le signal de commande (stsig) est dérivé à partir de la comparaison des valeurs caractéristiques (RXLEV, RXQUAL, ta, C/I) correspondant entre elles, lequel commande un dispositif de commutation (UE) qui commute un signal suivant individuellement pour le canal de radiocommunication vers un des dispositifs d'antenne (A1, A2) de la première station radio (BS).

5. Procédé selon la revendication 4, dans lequel les valeurs caractéristiques (RXLEV, RXQUAL, ta, C/I) déterminées sont transmises vers la première station radio (BS) et le signal de commande (stsig) est déduit de celles-ci.

6. Procédé selon la revendication 4, dans lequel le signal de commande (stsig) est déduit dans la deuxième station radio (MS) et transmis vers la première station radio (BS).

7. Procédé selon la revendication 5 ou 6, dans lequel la transmission des valeurs caractéristiques (RXLEV, RXQUAL, ta, C/I) ou du signal de commande (stsig) s'effectue selon une signalisation intrabande.

8. Procédé selon l'une des revendications précédentes, dans lequel, dans le cas où une différence entre les valeurs caractéristiques (RXLEV, RXQUAL, ta, C/I) déterminées et correspondant entre elles ne dépasse pas une valeur de seuil prédéfinie, un chemin de transmission est à chaque fois sélectionné en changeant périodiquement de manière à ce qu'au moins deux signaux successifs décorrélés soient transmis par le biais de chemins de transmission différents.

9. Procédé selon l'une des revendications précédentes, dans lequel la structure fine spécifique à la liaison est formée par un code CDMA (c).

10. Procédé selon la revendication 9, dans lequel le procédé de séparation des abonnés employé est un procédé TD/CDMA, un canal de radiocommunication étant défini par une bande de fréquences (B), un intervalle de temps (ts) et un code CDMA.

11. Procédé selon la revendication 10, dans lequel la transmission du signal est réalisée selon un procédé TDD, les signaux de la première station radio (BS) vers la deuxième station radio (MS) et de la deuxième station radio (MS) vers la première station radio (BS) étant transmis séparément dans le temps dans une bande de fréquences (B).

12. Procédé selon la revendication 10 ou 11, dans lequel au moins deux signaux successifs sont transmis en modifiant l'intervalle de temps (ts), l'intervalle de temps (ts) utilisé pour la transmission étant modifié périodiquement et de manière synchrone avec le protocole de temps du procédé de séparation des abonnés.

13. Procédé selon l'une des revendications précédentes, dans lequel au moins deux signaux successifs sont transmis en modifiant la bande de fréquences (B), la bande de fréquences (B) utilisée pour la transmission étant modifiée périodiquement et de manière synchrone avec le protocole de temps du procédé de séparation des abonnés.

14. Procédé selon l'une des revendications précédentes, dans lequel les signaux transmis sont reçus dans la première station radio (BS) et/ou dans la deuxième station radio (MS) selon le procédé de détection conjointe.

15. Procédé selon l'une des revendications précédentes, dans lequel les valeurs caractéristiques (RXLEV, RXQUAL, ta, C/I) déterminées sont un niveau de réception, un taux d'erreurs binaires et/ou une valeur proportionnelle au temps de propagation du signal (ta) entre la première station radio (BS) et la deuxième station radio (MS) et/ou un rapport signal/bruit.

16. Station radio (BS, MS) pour la transmission de signal par le biais d'une interface radio dans un système de radiocommunication qui
- emploie un procédé de séparation des abonnés pour différencier les signaux, un canal de radiocommunication étant défini au moins par une bande de fréquences (B) et une structure fine spécifique à la liaison (c),
comprenant
- au moins un dispositif d'antenne (A1, A2) pour recevoir et/ou émettre au moins un signal qui est transmis par le biais d'au moins deux chemins de transmission,
- un dispositif d'analyse (AW) pour déterminer au moins une valeur caractéristique (RXLEV, RXQUAL, ta, C/I) concernant les conditions de transmission au niveau de l'interface radio pour chaque chemin de transmission,
- un dispositif de commande (SE) pour dériver un signal de commande (stsig) à partir d'une comparaison des valeurs caractéristiques correspondant entre elles (RXLEV, RXQUAL, ta, C/I) et à partir d'une comparaison d'une différence entre les valeurs caractéristiques (RXLEV, RXQUAL, ta, C/I) avec une valeur de seuil prédéfinie, et
- un dispositif de commutation (UE) commandé par le signal de commande (sig) qui sélectionne le chemin de transmission individuellement pour le canal de radiocommunication destiné à la transmission d'un signal suivant, le dispositif de commutation (UE) sélectionnant à chaque fois en changeant périodiquement un chemin de transmission dans le cas où la différence entre les valeurs caractéristiques (RXLEV, RXQUAL, ta, C/I) ne dépasse pas la valeur de seuil prédéfinie de manière à ce qu'au moins deux signaux successifs décorrélés soient transmis par le biais de chemins de transmission différents.

17. Station radio (BS, MS) selon la revendication 16, réalisée sous la forme d'une station de base d'un système de télécommunication mobile.

18. Station radio (BS, MS) selon la revendication 16, laquelle est réalisée sous la forme d'une station mobile d'un système de télécommunication mobile.
